# DEMANDE DE BREVET EUROPEEN

(11) **EP 2 524 790 A1**
(43) Date de publication de la demande: **21.11.2012**
(21) Numéro de dépôt: 12167920.3
(22) Date de dépôt: 14.05.2012
(51) Int. Cl.: B29C 45/56, B22D 17/22

(54) **Moule et procédé de moulage par injection d'une pièce avec une partie en saillie**

(30) Priorité: 17.05.2011 FR 1154256
(71) Demandeur: VALEO VISION, 93012 Bobigny Cedex (FR)
(72) Inventeur: Desmazieres, Michel, 41700 COUDDES (FR); Gosselin, François, 49000 ANGERS (FR)

(57) **Abrégé**

L'invention a trait à un moule et un procédé pour le moulage par injection de matière plastique d'une pièce généralement mince, notamment de dispositif d'éclairage et/ou de signalisation pour véhicule. Le moule comprend deux demi-moules 104 et 106 destinés à être disposés l'un contre l'autre et formant une enceinte 108 destinée à être remplie de matière plastique 118 par injection. La matière plastique 118 est injectée via une buse d'injection 110 à proximité d'une extrémité de la pièce. Le volume 108 formé par le moule comprend une cavité 116 dont le volume peut être modulé grâce à un élément mobile 124. Lors de l'injection de matière plastique 118, lorsque cette dernière à atteint au moins le niveau de la cavité, le volume de la cavité 116 initialement nul est progressivement augmenté via les moyens de commande 128 de l'élément mobile 124. La matière plastique peut ainsi progressivement pénétrer de tout son front la cavité sans devoir évacuer de l'air. La partie en saillie ainsi formée par la cavité 116 à volume modulable présente une forme finale parfaitement conforme sans formation de défauts provoqués notamment par l'évacuation d'air.

## Description

L'invention a trait à un élément de moule pour le moulage de pièces par injection de matière plastique. L'invention a trait également à un moule comprenant ledit élément de moule. L'invention a trait également à un procédé de moulage d'une pièce par injection de matière plastique, ainsi qu'à une pièce, notamment de dispositif d'éclairage et/ou de signalisation, réalisée par ledit procédé.

La fabrication de pièces en plastique par injection dans un moule est bien connue en soi et pratiquée de manière courante. Le moulage par injection, aussi appelé injection plastique, est un procédé de mise en oeuvre des thermoplastiques. La plupart des pièces en thermoplastique sont fabriquées avec des presses d'injection plastique : la matière plastique est ramollie puis injectée dans un moule, et ensuite refroidie. Le moulage par injection est une technique de fabrication de pièces en grande ou très grande série. Il concerne avant tout les matières plastiques et les élastomères (caoutchoucs) mais aussi divers métaux et alliages à point de fusion relativement bas : alliages d'aluminium, de zinc (Zamak), laitons ou encore d'alliages de magnésium en particulier transformés par procédé de thixomoulage.

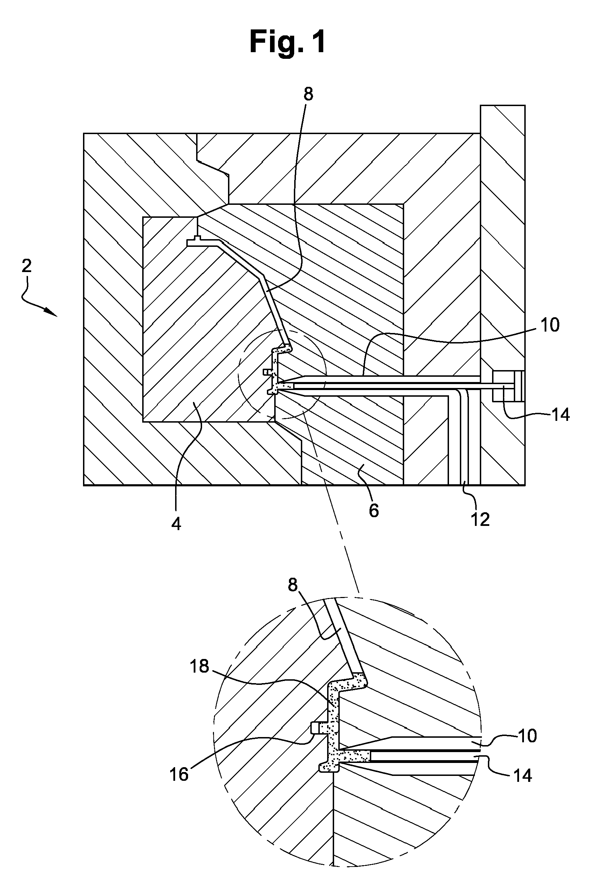

La figure 1 illustre une vue en coupe d'un moule 2 connu. Il comprend essentiellement deux demi-moules 4 et 6 disposés l'un contre l'autre et formant un volume 8 destiné à être rempli de matière plastique en vue de former la pièce. Le demi-moule 6 comprend une buse d'injection 10 alimentée par le passage 12 en matière plastique et actionnée par un dispositif de commande 14.

La zone d'entrée de la matière plastique dans le volume 8 formé par le moule 2 est illustrée de manière plus détaillée à la partie inférieure de la figure correspondant à un zoom de la partie encerclée du moule 2. La buse d'injection 10 alimente le volume 8 à un point bas de sorte à ce que la matière plastique remplisse d'abord la partie inférieure de la pièce pour ensuite remplir la partie haute. La matière plastique 18 est représentée par une zone plus foncée sur l'agrandissement de la figure 1. Le volume 8 comprend une cavité 16 formant saillie depuis le reste de la pièce à former. Lors de l'injection de la matière plastique, celle-ci va partiellement remplir la cavité 16 sans pour autant la remplir complètement en raison de l'accumulation d'air dans le fond de la cavité. Le remplissage incomplet de la cavité est bien visible à la figure 1.

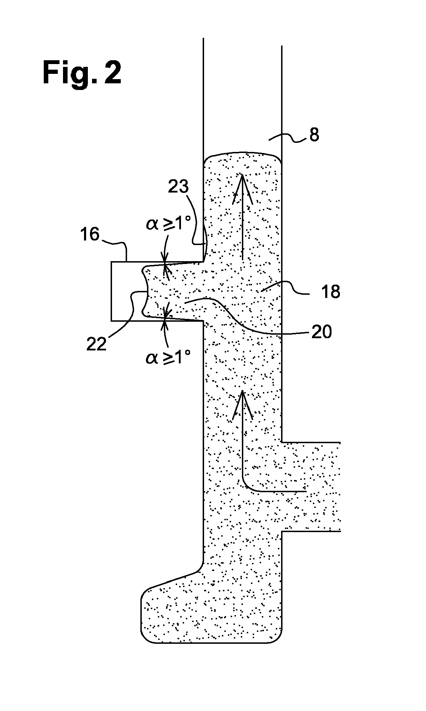

La figure 2 illustre avec davantage de détails le phénomène de formation de défaut au niveau de la cavité 16 du volume 8 de la figure 1. La matière plastique 18 en écoulement dans le volume remplit partiellement ce dernier, le niveau supérieur étant illustré par une surface arrondie à la manière d'un ménisque convexe. On peut observer la formation incomplète de la partie en saille 20 de la pièce. Cette partie 20 présente un angle de dépouille supérieur ou égal à 1° par rapport à la surface interne de la cavité 16. La face d'extrémité 22 de la partie en saillie 20 présente de plus une surface non plane et non régulière. Lors de l'écoulement de la matière plastique 18 dans la cavité, de l'air s'est échappé et a été entrainé en aval. En fonction de divers paramètres rhéologiques comme notamment la viscosité de la matière plastique et de la vitesse d'écoulement, une partie de cet air peut rester emprisonné dans une zone 23 disposée en aval de l'entrée de la cavité 16. En fonction de divers paramètres rhéologiques, le flux d'écoulement, en passant devant la cavité, peut également être perturbé par les changements brutaux d'épaisseur générant également divers défauts de la pièce. Il résulte de ces phénomènes différents types de défauts au niveau de la pièce finie.

L'objectif de la présente invention est de proposer une solution à au moins un des problèmes sus mentionnés. Plus particulièrement, l'invention a pour objectif de proposer un moule pour la fabrication par injection de pièces présentant au moins une partie en saillie tel qu'un plot et un procédé de moulage pour la fabrication de telles pièces qui réduit, voire élimine, les défauts sus mentionnés.

L'invention a pour objet un élément de moule pour moulage de pièces par injection de matière plastique, comprenant: une surface destinée à recevoir la matière plastique et à former la pièce, ladite surface comprenant une cavité apte à former une partie en saillie de la pièce; remarquable en ce que l'élément de moule comprend un élément mobile en translation dans la cavité, l'élément mobile étant apte à moduler le volume de cavité lors du moulage de la pièce.

Selon un mode avantageux de l'invention, l'élément mobile est configuré pour pouvoir être disposé avec sa surface extérieure au niveau de l'ouverture de la cavité. Selon un autre mode avantageux de l'invention, la cavité est de forme généralement allongée voire rectiligne selon une direction longitudinale et éventuellement quelconque selon une direction transversale, l'élément mobile étant mobile selon la direction longitudinale et de préférence occupant, en section, une majeure partie, préférentiellement au moins 80%, plus préférentiellement encore au moins 90% de la section de la cavité.

Selon un autre mode avantageux de l'invention, l'élément mobile est mobile en translation via un dispositif de commande. Selon un exemple de réalisation, le dispositif de commande est apte à déplacer l'élément mobile dans la cavité depuis l'ouverture de la cavité. Le dispositif de commande peut être du type hydraulique. Le dispositif de commande peut bien sûr être d'une autre nature telle que pneumatique, électrique ou autre, bien connue en soi de l'homme de métier.

Il est ainsi possible de piloter de manière précise la modulation du volume de cavité lors du moulage de la pièce. Il est notamment possible de donner à la partie en saillie de la pièce une forme répétable, comme par exemple une forme de référence.

L'invention a également pour objet un moule pour le moulage d'une pièce par injection de matière plastique, comprenant au moins deux éléments de moule destinés à coopérer l'un avec l'autre de manière à former une enceinte correspondant à la forme de la pièce à former et destinée à recevoir la matière plastique suivant une direction principale d'écoulement, **caractérisé en ce qu'**au moins un des éléments de moule est conforme à l'invention.

Selon un mode avantageux de l'invention, la cavité est disposée de manière généralement transversale à la direction principale d'écoulement de la matière plastique lors de la fabrication de la pièce par injection. La cavité comporte un axe longitudinal formant avec la direction principale d'écoulement au niveau de la cavité un angle préférentiellement compris entre 30° et 90°, plus préférentiellement encore compris entre 45° et 90°. Lorsque l'angle en question est inférieur à 90°, la cavité peut être orientée dans le sens de l'écoulement ou dans le sens contraire.

Selon un autre mode avantageux de l'invention, la pièce a une forme généralement mince, présentant préférentiellement une forme sensiblement en nappe, la partie formée par la cavité étant en saillie de la pièce mince, notamment d'une face principale de la pièce.

Selon un encore autre mode avantageux de l'invention, le moule comprend un passage d'amenée de la matière plastique dans l'enceinte de moulage, la cavité étant disposée en aval dudit passage suivant la direction d'écoulement de la matière plastique lors du moulage.

L'invention a également pour objet un procédé de moulage d'une pièce par injection plastique, comprenant les étapes suivantes: a) mise à disposition d'un moule formant une enceinte correspondant à la forme de la pièce à former, l'enceinte comprenant une cavité destinée à former une partie de la pièce faisant saillie; b) injection de matière plastique dans l'enceinte du moule; remarquable par l'étape supplémentaire suivante c) modulation du volume de la cavité dans le sens d'une augmentation dudit volume lors de l'étape b).

Selon un mode avantageux de l'invention, la modulation de l'étape c) consiste à augmenter le volume de la cavité lorsque le niveau de matière plastique a atteint au moins l'entrée de la cavité.

Selon un autre mode avantageux de l'invention, la modulation de l'étape c) a lieu lorsque la matière plastique présente dans et/ou devant l'entrée de la cavité n'est pas encore solidifiée. Un avantage de cette caractéristique est que la pièce moulée est dépourvue de fissures, notamment au niveau de la partie de la pièce faisant saillie. Il est par conséquent possible d'utiliser des matières plastiques sensibles à la fissuration sous contrainte, comme par exemple le polycarbonate ou le PMMA.

Selon un encore autre mode avantageux de l'invention, la modulation de l'étape c) comprend le fait de partir d'un volume de cavité inférieur à 20%, préférentiellement 10%, plus préférentiellement encore 5% du volume final de la cavité. Préférentiellement, la totalité du volume final de la cavité est comblé au début de l'étape c).

Selon un encore autre mode avantageux de l'invention, le moule est conforme à l'invention ou comprend un élément de moule selon l'invention.

Selon un autre mode avantageux de l'invention, la pièce moulée est un élément de dispositif d'éclairage et/ou de signalisation de véhicule, et la partie en saillie formée par la cavité est par exemple un plot. Il peut s'agir d'un plot de fixation d'un autre élément du dispositif d'éclairage et/ou de signalisation.

Selon un autre mode avantageux de l'invention, la partie de la pièce en saillie présente un volume inférieur ou égal à 15%, préférentiellement 10%, plus préférentiellement encore 5% du volume total de la pièce.

Selon un autre mode avantageux de l'invention, le procédé comprend une étape supplémentaire d) consistant en la modulation du volume de la cavité dans le sens d'une diminution dudit volume après l'étape c).

Selon un mode avantageux de l'invention, la modulation de l'étape d) consiste à diminuer le volume de la cavité lorsque le niveau de matière plastique a atteint une taille prédéterminée, notamment une taille de référence.

Selon un encore autre mode avantageux de l'invention, la modulation de l'étape d) comprend le fait d'arriver à un volume de cavité supérieur à 85%, préférentiellement 90%, plus préférentiellement encore 95% du volume final de la cavité.

Cette étape supplémentaire d) permet de garantir la forme de la partie en saillie et notamment d'éviter la présence de retassures sur cette partie en saillie.

L'invention a également pour objet un élément notamment de dispositif d'éclairage et/ou de signalisation de véhicule comprenant une partie en saillie, **caractérisé en ce qu'**il est produit suivant le procédé selon l'invention et l'extrémité de la partie en saillie présente une arête formée par l'étape c).

Selon un mode avantageux de l'invention, la partie en saillie présente une contrainte résiduelle inférieure à 10 MPa. Cette caractéristique pourra être mesurée par exemple par la méthode du perçage.

Les mesures sus mentionnés de l'invention permettent, en modulant le volume de la cavité, une pénétration progressive de la matière injectée, cette dernière pouvant ainsi avancer progressivement de tout son front dans la cavité au fur et à mesure de l'augmentation de son volume. La pièce à former est généralement mince, formant préférentiellement une plaque. La cavité présente préférentiellement une section moyenne et/ou une section d'entrée inférieure ou égale à la plus petite section de la pièce à hauteur de la cavité.

D'autres caractéristiques et avantages de la présente invention seront mieux compris à l'aide de la description et des dessins parmi lesquels :
- la figure 1 est une vue en coupe d'un moule pour pièces généralement minces avec au moins un plot faisant saillie, le moule étant connu de l'état de la technique ;
- la figure 2 est une vue agrandie de la partie critique du volume du moule de la figure 1, illustrant les différents défauts qui peuvent être générés lors de la fabrication de la pièce par injection plastique ;
- la figure 3 est une vue en coupe d'un moule conforme à l'invention ;
- la figure 4 est une vue agrandie de la partie critique du volume du moule de la figure 3, illustrant une première étape de moulage de la pièce ;
- la figure 5 est une vue agrandie de la partie critique du volume du moule de la figure 3, similaire à la figure 4 mais illustrant une deuxième étape de moulage de la pièce.

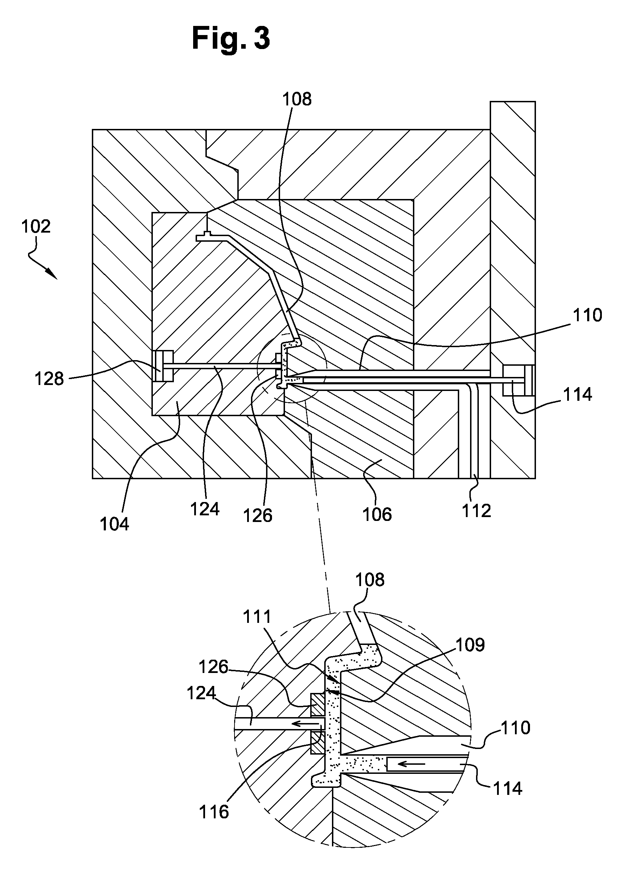

Le moule 102 illustré en coupe à la figure 3 comprend essentiellement deux demi-moules 104 et 106. Ces deux demi-moules 104 et 106 sont destinés à être disposés et maintenus en contact l'un sur l'autre de manière à former une enceinte 108. Cette enceinte est destinée à être remplie de matière plastique par injection en vue de former une pièce généralement mince, telle qu'une pièce d'un dispositif d'éclairage et/ou de signalisation pour véhicules. L'enceinte 108 est définie par les surfaces correspondantes 109 et 111 des demi-moules 104 et 106.

Le demi-moule de droite 106 comporte une buse d'injection 110 avec un organe de commande 114 et une arrivée de matière plastique 112. La sortie de cette buse 110 débouche à proximité d'une extrémité de la pièce à former ou débouche à proximité d'un canal d'alimentation de ladite pièce.

Le demi-moule de gauche 104 comprend un insert 126 disposé dans un évidement correspondant. La surface extérieure de l'insert 126 affleure la surface avoisinante 109 du demi-moule 104. L'insert 126 comprend un orifice traversant au travers duquel une tige mobile 124 est disposée. Cette dernière est mobile en translation via un dispositif de commande 128 du type hydraulique. Le dispositif de commande peut bien sûr être d'une autre nature telle que pneumatique, électrique ou autre, bien connue en soi de l'homme de métier.

Comme cela est bien visible à la partie zoomée de la figure 3, la tige mobile en translation 124 occupe initialement la totalité ou la quasi-totalité du volume de la cavité 116 formée par le passage au travers de l'insert 126. Le volume de ladite cavité est ainsi essentiellement nul au début de l'opération d'injection. Il pourra être modulé dans le sens d'une augmentation par déplacement progressif de la tige lors de l'opération d'injection. L'épaisseur de l'insert est égale ou supérieure à la course maximale de la tige, c'est-à-dire à la profondeur maximale de la cavité.

L'insert est réalisé dans un matériau adapté aux conditions de température d'injection de matière plastique et adapté au support et maintien de la tige mobile 124. Il est à noter qu'en fonction du matériau choisi pour l'élément de moule comportant la tige mobile, la présence d'un insert peut ne pas être nécessaire. En effet, il est tout-à-fait envisageable de prévoir un usinage ou une mise à forme de nature quelconque de l'élément de moule de manière à ménager un passage directement dans l'élément en question apte à recevoir la tige mobile et à former la cavité.

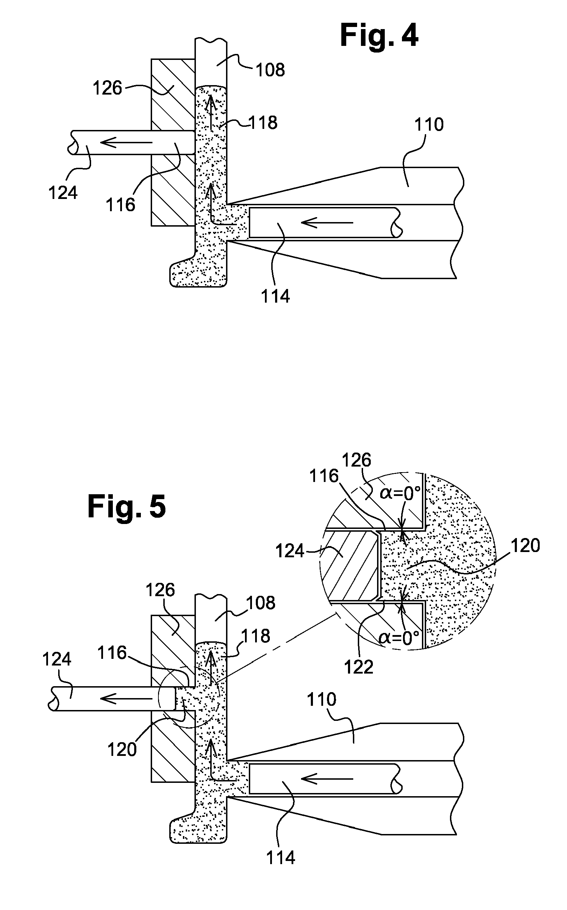

Les figures 4 et 5 illustrent avec davantage de détails la modulation du volume de la cavité à géométrie variable lors de l'injection de la matière plastique. La figure 4 illustre une première étape de formation de la pièce où la matière plastique commence à être injectée depuis la buse d'injection 110 et via l'organe de commande 114 se déplaçant vers l'enceinte 108 de manière à y pousser la matière plastique 118. Celle-ci remplit la partie inférieure de l'enceinte jusqu'à un niveau supérieur ou égal à celui de la tige 124. A ce stade, la tige 124 est positionnée à une position correspondant à un volume minimum de la cavité. Plus particulièrement, dans le cas précis de la figure 4, le volume minimum est nul, l'extrémité de la tige 124 affleurant la surface avoisinante formant la surface de l'enceinte de moulage 108.

A la figure 5, le niveau de remplissage de l'enceinte 108 par la matière plastique 118 est similaire à celui de la figure 4. La tige 124 a amorcé un mouvement de translation dans un sens correspondant à une augmentation du volume de la cavité. La matière plastique présente en face de la cavité est non encore solidifiée et sous pression. Elle peut ainsi progressivement remplir le volume variable de la cavité sans s'opposer à un volume d'air présent dans la cavité. La matière plastique peut ainsi librement remplir le volume de la cavité au fur et à mesure que ce dernier augmente. La matière peut rapidement entrer en contact avec le fond mobile de la cavité dés le début du processus de déplacement de la tige 124 pour ensuite avancer de tout son front et remplir le volume ainsi généré.

Comme cela est bien visible à la partie zoomée de la figure 5, la matière plastique présente dans la cavité et formant la partie en saillie 120 de la pièce en cours de formation est bien en contact continu avec les parois de la cavité. L'angle α formé par les parois de la partie en saillie 120 ainsi formée, avec les parois correspondantes de la cavité est quasi nul. De plus, la face avant ou extrême de la partie en saillie 120 de la pièce forme à sa périphérie une ou plusieurs arêtes 122 de forme annulaire notamment circulaire ou non (rectangle, carré, trapèze ou autre), qui correspondent au jeu présent entre la tige 124 et le passage correspondant de l'insert 126 dans lequel la tige 124 est logée. Ce jeu est notamment formé, du moins à l'extrémité de la tige, par le biseau ou arrondi de l'arête frontale de la tige 124.

Dans le cas précis des figures 3 à 5, la partie en saillie 120 de la pièce à former ne présente pas d'angle de dépouille par rapport à la cavité. Lors du démoulage, la tige 124 peut être déplacée dans un sens correspondant à une diminution du volume de la cavité de manière à expulser ladite partie 120 de la cavité.

La section de la partie en saillie 120 de la pièce à former qui est illustrée aux figures 3 à 5 est circulaire, et ce pour des raisons de simplicité et de clarté d'exposé de l'invention. Dans la réalité, la partie en saillie de la pièce à former pourra présenter diverses sections. En effet, le principe d'occupation du volume de la cavité est applicable à toutes sortes de section. De plus, il n'est pas nécessaire que la tige ou élément mobile occupe la totalité de la section de la cavité. En effet, une occupation d'au moins 80%, préférentiellement 90%, plus préférentiellement encore 95% de la section de la cavité peut suffire pour assurer les effets avantageux décrits ci-avant.

Toujours pour des raisons de simplicité et de clarté d'exposé de l'invention, la cavité illustrée aux figures 3 à 5 a été volontairement agencée à la perpendiculaire de la direction principale d'écoulement de matière plastique. En pratique, la cavité pourra présenter des géométries autres de celle illustrée, notamment avec des angles d'inclinaison par rapport à la direction principale d'écoulement de matière plastique différent de 90°.

Il est également à noter que la pièce à former peut comporter plusieurs parties en saillie telles que celle illustrée aux figures 3 à 5. Le moule peut ainsi comporter plusieurs dispositifs de cavité à volume variable tel que celui qui est décrit.

Les avantages de l'invention décrits précédemment sont particulièrement intéressants pour des parties en saillie de petite section. En effet, dans le cas de cavités de petite section, en fonction des conditions rhéologiques d'injection de la matière plastique, cette dernière pourra éventuellement rapidement couvrir l'entrée de la cavité et empêcher l'évacuation de l'air présent dans le fond de la cavité et/ou voir son flux d'écoulement perturbé par le changement d'épaisseur. Préférentiellement, le volume de la partie en saillie forme moins de 10%, plus préférentiellement 5%, plus préférentiellement encore 1% du volume total de la pièce.

Le volume de la partie en saillie peut être de l'ordre de quelques mm³, par exemple entre 5 et 50 mm³ pour un volume total de la pièce moulée de l'ordre de quelques centaines de cm³, par exemple entre 100 et 800 cm³.

La modulation du volume de la cavité peut être opérée de différentes manières. En effet, l'augmentation du volume de la cavité peut démarrer dés que la matière plastique atteint l'entrée de la cavité. Elle peut également démarrer plus tard, lorsque qu'une certaine longueur ou colonne de matière est présente en aval de la cavité, de manière à ce que la matière plastique en face de la cavité présente un certain niveau de pression. De plus, la vitesse de modulation du volume de la cavité peut dépendre de différents facteurs comme notamment la vitesse de solidification de la matière plastique.

L'invention qui vient d'être décrite en relation avec l'injection de matière plastique est applicable à l'injection de toutes les matières plastiques et les élastomères ainsi qu'à divers métaux et alliages à point de fusion relativement bas tels que les alliages d'aluminium, de zinc (Zamak), de laitons ou encore d'alliages de magnésium en particulier transformés par procédé de thixomoulage.

## Revendications

1. Elément de moule (104) pour moulage de pièce par injection de matière plastique, comprenant :
une surface (109) destinée à recevoir la matière plastique et à former la pièce, ladite surface comprenant une cavité (116) apte à former une partie en saillie (120) de la pièce ;
**caractérisé en ce que**
l'élément de moule (104) comprend un élément mobile (124) en translation dans la cavité (116), l'élément mobile étant apte à moduler le volume de cavité lors du moulage de la pièce.

2. Elément de moule (104) selon la revendication 1, **caractérisé en ce que** l'élément mobile (124) est configuré pour pouvoir être disposé avec sa surface extérieure terminale au niveau de l'ouverture de la cavité (116), notamment à affleurement de ladite ouverture.

3. Elément de moule (104) selon l'une des revendications 1 et 2, **caractérisé en ce que** la cavité (116) est de forme généralement allongée selon une direction longitudinale, l'élément mobile (124) étant mobile selon la direction longitudinale et de préférence occupant, en section, une majeure partie, préférentiellement au moins 80%, plus préférentiellement encore au moins 90% de la section de la cavité.

4. Moule pour le moulage d'une pièce par injection de matière plastique, comprenant au moins deux éléments de moule (104, 106) destinés à coopérer l'un avec l'autre de manière à former une enceinte (108) correspondant à la forme de la pièce à former et destinée à recevoir la matière plastique (118) suivant une direction principale d'écoulement, **caractérisé en ce qu'**au moins un des éléments de moule (104) est conforme à l'une des revendications 1 à 3.

5. Moule selon la revendication 4, **caractérisé en ce que** la cavité (116) est disposée de manière généralement transversale à la direction principale d'écoulement de la matière plastique (118) lors de la fabrication de la pièce par injection.

6. Moule selon l'une des revendications 4 et 5, **caractérisé en ce que** la pièce a une forme généralement mince, présentant préférentiellement une forme sensiblement en nappe, la partie (120) formée par la cavité (116) étant en saillie de la pièce mince, notamment d'une face principale de la pièce.

7. Moule selon l'une des revendications 4 à 6, **caractérisé en ce qu'**il comprend un passage (110) d'amenée de la matière plastique dans l'enceinte de moulage, la cavité (116) étant disposée en aval dudit passage suivant la direction d'écoulement de la matière plastique lors du moulage.

8. Procédé de moulage d'une pièce par injection plastique, comprenant les étapes suivantes :
a) mise à disposition d'un moule (104, 106) formant une enceinte (108) correspondant à la forme de la pièce à former, l'enceinte comprenant une cavité (116) destinée à former une partie de la pièce faisant saillie (120) ;
b) injection de matière plastique (118) dans l'enceinte (108) du moule (104, 106) ;
**caractérisé par** l'étape supplémentaire suivante
c) modulation du volume de la cavité (116) dans le sens d'une augmentation dudit volume lors de l'étape b).

9. Procédé de moulage selon la revendication 8, **caractérisé en ce que** la modulation de l'étape c) consiste à augmenter le volume de la cavité (116) lorsque le niveau de matière plastique (118) a atteint l'entrée de la cavité.

10. Procédé de moulage selon la revendication 9, **caractérisé en ce que** la modulation de l'étape c) a lieu lorsque la matière plastique (118) présente dans et/ou devant l'entrée de la cavité (116) n'est pas encore solidifiée.

11. Procédé de moulage selon l'une des revendications 8 à 10, **caractérisé en ce que** la modulation de l'étape c) comprend le fait de partir d'un volume de cavité (116) inférieur à 20%, préférentiellement 10%, plus préférentiellement encore 5% du volume final de la cavité.

12. Procédé de moulage selon l'une des revendications 8 à 11, **caractérisé en ce que** le moule (104, 106) est conforme à l'une des revendications 4 à 7 ou comprend un élément de moule (104) selon l'une des revendications 1 à 3.

13. Procédé de moulage selon l'une des revendications 8 à 12, **caractérisé en ce que** la pièce moulée est un élément de dispositif d'éclairage et/ou de signalisation de véhicule, et la partie en saillie formée par la cavité est par exemple un plot (120).

14. Procédé de moulage selon l'une des revendications 8 à 13, **caractérisé en ce que** la partie en saillie (120) de la pièce présente un volume inférieur ou égal à 15%, préférentiellement 10%, plus préférentiellement encore 5% du volume total de la pièce.

15. Elément notamment de dispositif d'éclairage et/ou de signalisation de véhicule comprenant une partie en saillie (120), **caractérisé en ce qu'**il est produit suivant le procédé selon l'une des revendications 8 à 14, ce mode de production étant visible **en ce que** l'extrémité de la partie en saillie (120) présente une arête (122) formée par l'étape c).
